Europäisches Patentamt

European Patent Office

Office européen des brevets

(19)

(11) **EP 1 217 376 A1**

(12) **EUROPEAN PATENT APPLICATION**

(43) Date of publication:
**26.06.2002 Bulletin 2002/26**

(51) Int Cl.⁷: **G01N 33/543**

(21) Application number: **01130123.1**

(22) Date of filing: **18.12.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Nakao, Motonato, Hitachi Software Eng. Co.,Ltd.**<br>  **Yokohama-shi, Kanagawa 231-8475 (JP)**<br>• **Yamamoto, Kenji, Hitachi Software Eng. Co.,Ltd.**<br>  **Yokohama-shi, Kanagawa 231-8475 (JP)**<br>• **Ito, Toshiaki, Hitachi Software Eng. Co.,Ltd.**<br>  **Yokohama-shi, Kanagawa 231-8475 (JP)** |
| (30) Priority: **22.12.2000 JP 2000391365** | |
| (71) Applicant: **Hitachi Software Engineering Co., Ltd.**<br>**Yokohama-shi, Kanagawa 231-8475 (JP)** | (74) Representative: **Liesegang, Roland, Dr.-Ing.**<br>**FORRESTER & BOEHMERT**<br>**Pettenkoferstrasse 20-22**<br>**80336 München (DE)** |

(54) **Beads**

(57)    Provided is a technology for increasing types of color separation in accordance with density gradients by refining the mode of setting gradients in the event of two-dimensional or three-dimensional color separation. A conventional color separation is conducted in a manner that dots indicating densities are defined in intersecting points of lines parallel to the X axis and the Y axis, respectively, in the case of two-dimensional color separation. In the case of three-dimensional color separation, dots indicating densities are defined in intersecting points of lines parallel to the XY axis, the YZ axis and the ZX axis, respectively. The present invention does not define the dots in the intersecting points of those parallel lines. Instead, the dots are configured to be shifted. An analysis based on the shifted configuration of the dots enables more secured separation than an analysis based on the conventional color separation, and resultantly the number of the dots can be increased in comparison with the conventional color separation provided that such analyses take place under the same degrees of precision.

FIG.1B

EP 1 217 376 A1

**Description**

BACKGROUND OF THE INVENTION

The present invention relates to beads usable as markers of probes or the like for detection of single nucleotide polymorphism (hereinafter referred to as SNP). Specifically, the present invention relates, for example, to beads separable in a large number of types with a small number of colors thereof.

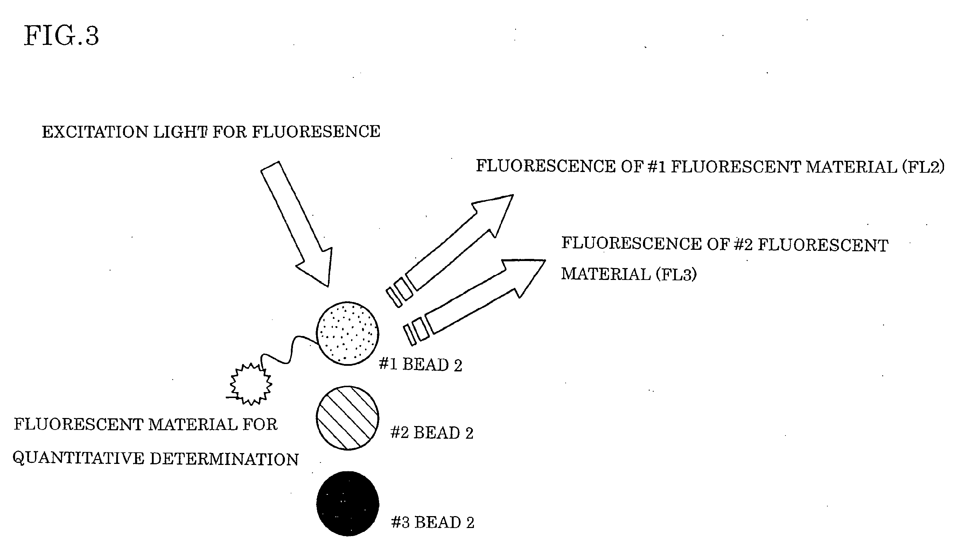

Fig. 3 is a view showing beads used for separation. When a #1 fluorescent material 1 and a #2 fluorescent material 1 are sealed in each of transparent or translucent beads 2 and then light for fluorescence excitation is irradiated thereon, fluorescence FL2 characteristic of the #1 fluorescent material 1 and fluorescence FL3 characteristic of the #2 fluorescent material 2 are emitted separately. When quantities of the #1 fluorescent material 1 and the #2 fluorescent material 1 sealed in the beads are properly changed, brightness of the emitting fluorescence changes depending on the respective quantities. Accordingly, the respective quantities of the #1 fluorescent material 1 and the #2 fluorescent material 1 can be detected by detecting respective intensities of the emitting fluorescence attributable to the respective fluorescent materials 1, whereby the beads can be separated. Therefore, discrimination of probes becomes feasible by use of such beads as markers of probes for SNP detection. Note that the beads may be also marked with another fluorescent material for quantitative determination, so that a quantity of separated beads can be quantitatively measured by means of detecting a quantity of the light emitted from the fluorescent material.

In such a bead separation technology, for example, if each density of the two kinds of the florescent materials is segmented into 10 stages, then the beads can be separated by 100 (= 10 × 10) colors.

Theoretically, it is possible to provide more than 10 stages per a fluorescent material by closing up intervals of density. However, since measurement errors or the like may occur in actual measurement of fluorescence, the intervals of density require a certain threshold in order to secure such segmentation.

Moreover, when three-dimensional or four-dimensional segmentation is adopted by increasing the types of the fluorescent materials for use, color-coding of beads of 1,000 (= $10^3$) types in the three dimensional segmentation or 10,000 (= $10^4$) types in the four dimensional segmentation becomes feasible.

For production of beads, polypropylene or the like having high transparency or the like is typically used. Sizes of beads for use are discretionarily selected from nanometer order, micrometer order, millimeter order, centimeter order and so on, depending on objects of discrimination.

For example, a flow cytometer is used as a separation unit. A flow cytometer was originally developed as a unit for investigating conditions of cells; and is an analyzer for investigating conditions of erythrocytes and leukocytes by fluorescently marking forms and surfaces of cells. The flow cytometer is provided with a nozzle to flow cell particles one by one, a laser light source for measurement of the cells, a detector composed of a photodiode or a photoelectron multiplier tube (a PMT), or the like.

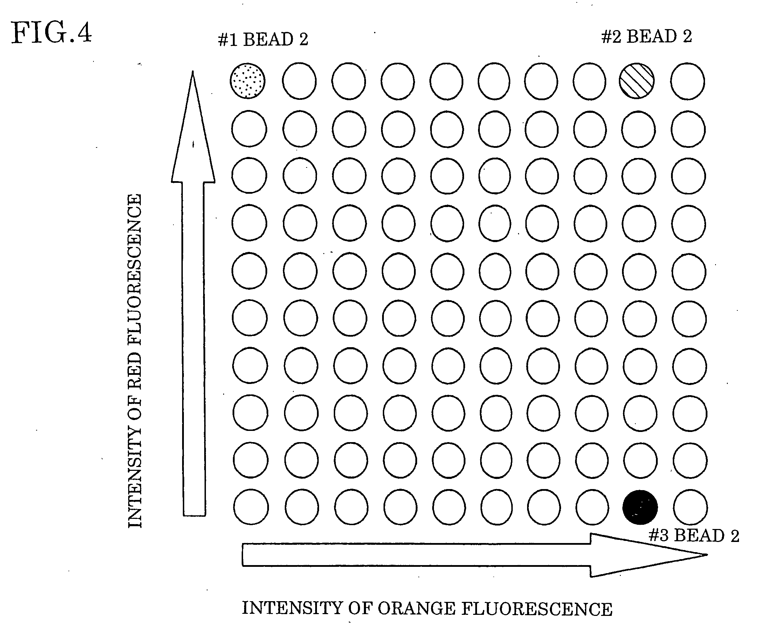

Fig. 4 is a view showing an example of conventional color allocation for two-dimensional color separation. The abscissa axis defines a density (i.e. fluorescence intensity) of an orange fluorescent material, while the ordinate axis defines a density (i.e. fluorescence intensity) of a red fluorescent material. Each of the densities is segmented into 10 stages, whereby color-coding of beads of 100 (= 10 × 10) types becomes feasible. Accordingly, in the case of using three kinds of beads 2 of #1, #2 and #3, for example, if selected severally from one out of 100 combinations of the fluorescent material densities, each of the beads can be color-separated.

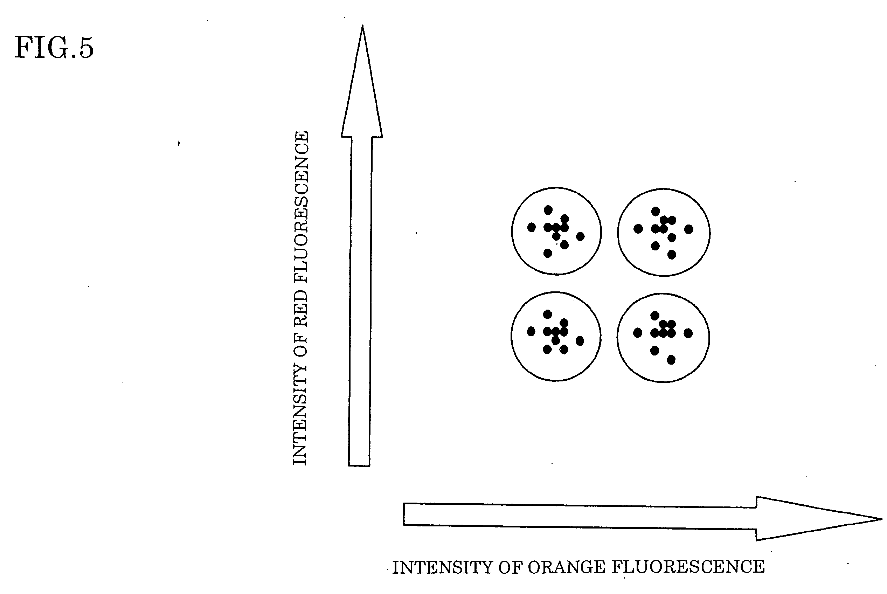

Fig. 5 is a view for describing measurement errors. In the actual measurement of fluorescence emitted by the fluorescent materials contained in the beads, a distribution of the fluorescence intensity with a certain range is observed, even if the beads contain the same densities of the fluorescent materials. Such distribution is attributable to errors arising upon actual measurement from quantities of the florescent materials sealed in, quantities of light emitted from the florescent materials, measuring instruments for measuring the quantities of the emitted light, and the like. Therefore, separation of the beads should be conducted in consideration of these errors. Since these errors generally follow a normal distribution taking an inherent density thereof as the center, it is necessary to secure a certain interval for an adjacent point of density in consideration of an error range having such distribution.

For instance, types of the beads for separation need to be increased from time to time for use in SNP detection or the like. For this reason, a technology for effectuating separation of a large number of beads with relatively small number of colors has been long required.

SUMMARY OF THE INVENTION

In consideration of the foregoing problem, an object of the present invention is to provide beads capable of separation of a larger number of beads by using fewer stages segmented of a characteristic quantity.

Beads according to the present invention include a combination of a plurality of beads. Here, each of the beads has a characteristic quantity corresponding to a location selected from a plurality of locations in two dimension, in which the plurality of locations includes: a first plurality of locations arrayed in a first line in a predetermined direction in a manner that mutual intervals thereof are minimal; and a second plurality of locations arrayed in a second line adjacent and parallel to the first line. In addition, the first plurality of locations and the second plurality of locations are shifted with respect to each other in directions of the respective lines.

Moreover, by providing the beads including a combination of a plurality of beads, each of which has a characteristic quantity corresponding to a location selected from a plurality of locations in dimension higher than two dimension, further enhancement of separable resolution becomes feasible.

Moreover, by defining the plurality of locations as locations in a closest packing structure, ideal separation resolution can be achieved.

BRIEF DESCRIPTION OF THE DRAWINGS

Fig. 1A is a view showing a conventional example of two-dimensional color allocation of beads, and Fig. 1B is a view showing two-dimensional color allocation of beads according to one embodiment of the present invention.

Fig. 2A is a top plan view showing three-dimensional color allocation of beads according to one embodiment of the present invention, and Fig. 2B is a side view thereof.

Fig. 3 is a view showing beads used for separation.

Fig. 4 is a view showing a conventional example of color allocation for two-dimensional color separation.

Fig. 5 is a view for describing a measurement error.

DETAILED DESCRIPTION OF THE PREFERRED EMBODIMENTS

Now, preferred embodiments of the present invention will be described in detail with reference to the accompanying drawings.

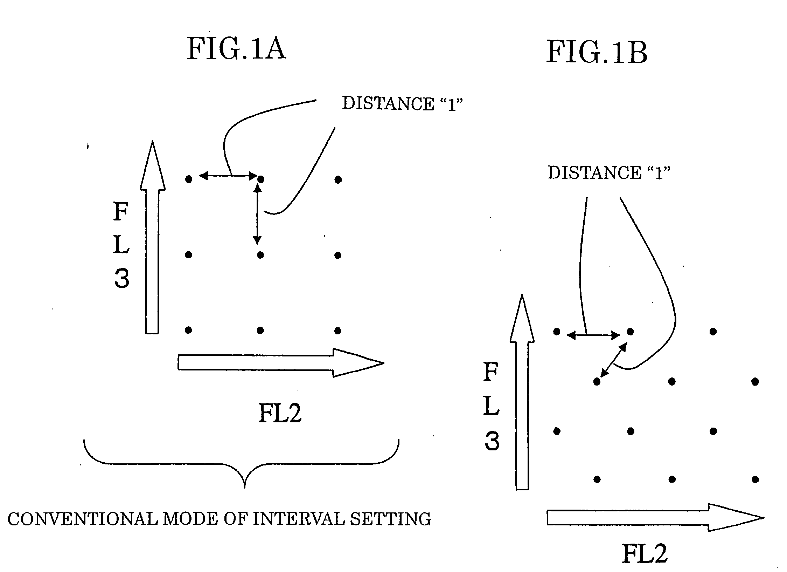

Figs. 1A and 1B are views for showing two-dimensional color allocation of beads. Fig. 1A shows a conventional example and Fig. 1B shows the color allocation of the present invention. Colors are employed as one example of characteristic quantities. In each of the drawings, light emission intensity of fluorescence FL2 is taken on an abscissa axis and light emission intensity of fluorescence FL3 is taken on an ordinate axis. Each of black dots in the drawings shows a bead for color separation, in which certain densities of the fluorescent materials are contained so as to emit the fluorescence FL2 and the fluorescence FL3 having light emission intensities indicated by the coordinates of the black dots. In the conventional example as shown in Fig. 1A, the dots are positioned at intersecting points of lines parallel to the fluorescence FL2 direction and fluorescence FL3 direction, respectively. That is, all the dots therein collectively form a grid. In this way, a minimal distance between the dots is defined as "1". On the contrary, in the present invention as shown in Fig. 1B, the dots are configured on a plurality of locations in two dimension, in which, with respect to locations arrayed in a line in a predetermined direction, locations arrayed in a line adjacent and parallel to the foregoing line are shifted in the direction of the fluorescence FL2. Particularly in the case of the example of Fig. 1B, the dots are configured on the locations to effectuate a closest packing structure on the plane. In this way, a minimal distance between the dots in Fig. 1B is also defined as "1".

Accordingly, while securing the minimal distance between the dots as "1" in the both examples, in the example of Fig. 1B, density intervals in the second dimension (in the direction of FL3) can be reduced to $\sqrt{3}/2$ ( $\fallingdotseq 0.866$) of that of the conventional example. In other words, it is feasible to increase separable resolution by about 15% ( $\fallingdotseq 1 / 0.866 - 1$).

In the event of actual separation of the beads, each of the beads is subjected to measurement of light emission intensities regarding the fluorescence FL2 and the fluorescence FL3 emitted therefrom, and then distances from the bead to dots in its neighborhood are calculated. Then, the bead is defined as being at the dot in the minimal distance from the bead, thus being separated.

In the present invention, when an argon laser is irradiated on a bead colored with fluorescein isothiocyanate (FITC) and phycoerythrin (PE), each of these fluorescent materials are excited by light of 488 nm wavelength, and FITC emits fluorescence of 530 nm wavelength and PE emits fluorescence of 575 nm wavelength. In this way, the beads can be discriminated by coloring the beads with variations of densities of FITC and PE. Fluorescent reagents used here are not particularly limited, and any combination of fluorescent reagents is applicable so far as an excitation wavelength and a fluorescence wavelength thereof do not overlap.

Besides the foregoing, the fluorescent materials excited by the light of 488 nm wavelength include ECD (made by Beckman Coulter: fluorescence of 613 nm wavelength), PC5/PE-Cy5 (made by Beckman Coulter: fluorescence of 670 nm wavelength).

In addition, installation of more than one laser light source enables response to other fluorescent reagents.

The beads are preferably set to have a diameter of several micrometers, because a usual flow cytometer is optimized for cells. Whereas the flow cytometer can measure forward-scattered light, such forward-scattered light reflects a size of a measured object. Accordingly, separation of only targeted beads is feasible by using the forward-scattered light as an index.

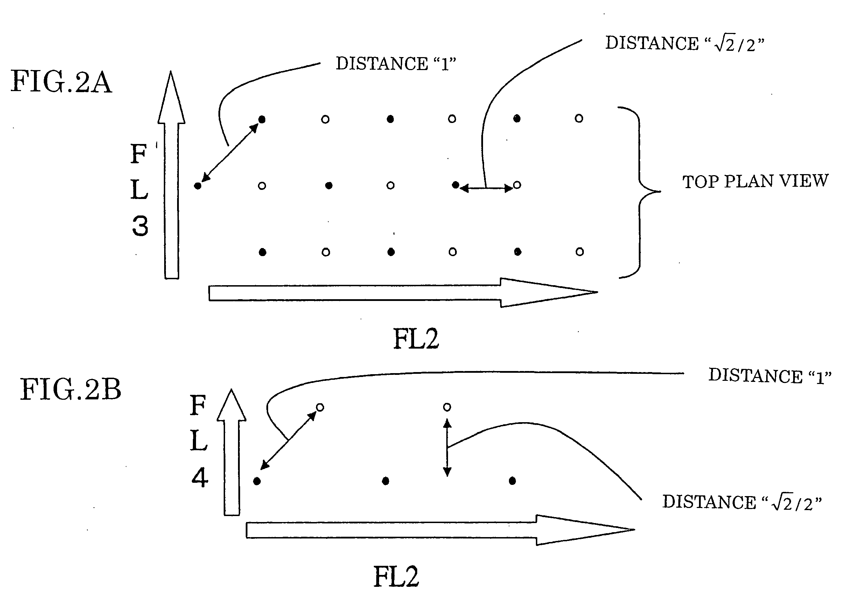

Figs. 2A and 2B are views for showing three-dimensional color allocation of beads according to one embodiment of the present invention. Fig. 2A is a top plan view, in which light emission intensity of fluorescence FL2 is taken on an abscissa axis and light emission intensity of fluorescence FL3 is taken on an ordinate axis. Black dots in the drawings are present on one plane and collectively form a grid slanted to the ordinate axis, which is virtually similar to the conventional example. A minimal distance between dots is also defined as "1". Meanwhile, white dots are present on a different plane from the black dots. When viewed two-dimensionally, i.e. from a viewpoint of the top plan view, the black dots and the white dots are present at different locations from one another. Moreover, each of the white dots is present in a position of equal distances from its surrounding black dots. Fig. 2B is a side view thereof, in which light emission intensity of fluorescence FL2 is taken on an abscissa axis and light emission intensity of fluorescence FL4 of a third fluorescent material is taken on an ordinate axis.

Three-dimensionally, by segmentation as illustrated in Figs. 2A and 2B, density gradient of the third dimension can be set to $\sqrt{2}/2$ ($\fallingdotseq 0.707$). Accordingly, in the same effective parts, it is feasible to increase separable resolution by about 41% ($\fallingdotseq 1/0.707 - 1$). Although Figs. 2A and 2B collectively illustrate a cubic closest packing structure, it is also feasible to increase separable resolution by about 41% similarly in a hexagonal closest packing structure.

However, it should be understood that the present invention is not limited to the foregoing embodiments.

As shown in Figs. 2A and 2B, linear directions to show the state of mutual intervals between dots being minimal are not necessarily aligned with the axes of characteristic quantities, i.e. the axes of the colors.

The characteristic quantity is not limited to the color, but it may be also defined as a frequency of an oscillator. In such a case, segmentation may take place in accordance with oscillation intensity or duty ratios of oscillation pulses from the oscillator, or the like.

The dimension is not particularly limited to the two dimension or the three dimension; and the dimension may be four or higher dimension. However, in any case, it is preferable to adopt a closest packing structure therein.

Scaling of the characteristic quantities is not limited to a linear scale, and nonlinear scales such as a logarithmic scale may be also applied thereto.

As described above, according to the present invention, segmentation in accordance with gradients can be increased in the two dimension by about 15% of separable resolution, in the three dimension by about 41% of separable resolution, and accordingly in the four or higher dimension.

**Claims**

1. Beads comprising:

a combination of a plurality of beads, each of the beads having a characteristic quantity corresponding to a location selected from a plurality of locations in two dimensions,

wherein the plurality of locations includes: a first plurality of locations arranged in a first line in a predetermined direction in a manner that mutual intervals thereof are minimal; and a second plurality of locations arranged in a second line adjacent and parallel to the first line, and

the first plurality of locations and the second plurality of locations are shifted with respect to each other in directions of the respective lines.

2. The beads according to claim 1, comprising:

a combination of a plurality of beads,

wherein each of the beads has a characteristic quantity corresponding to a location selected from a plurality of locations in three or higher dimension.

3. The beads according to claim 1, wherein the plurality of locations are defined as locations in a closest packing structure.

## FIG.1A

DISTANCE "1"

F
L
3

FL2

CONVENTIONAL MODE OF INTERVAL SETTING

## FIG.1B

DISTANCE "1"

F
L
3

FL2

EP 1 217 376 A1

EP 1 217 376 A1

FIG.2A

DISTANCE "1"

DISTANCE "$\sqrt{2}/2$"

FL3

TOP PLAN VIEW

FL2

FIG.2B

DISTANCE "1"

FL4

DISTANCE "$\sqrt{2}/2$"

FL2

# FIG.3

EXCITATION LIGHT FOR FLUORESENCE

FLUORESCENCE OF #1 FLUORESCENT MATERIAL (FL2)

FLUORESCENCE OF #2 FLUORESCENT MATERIAL (FL3)

#1 BEAD 2

FLUORESCENT MATERIAL FOR QUANTITATIVE DETERMINATION

#2 BEAD 2

#3 BEAD 2

FIG.4

#1 BEAD 2

#2 BEAD 2

INTENSITY OF RED FLUORESCENCE

#3 BEAD 2

INTENSITY OF ORANGE FLUORESCENCE

EP 1 217 376 A1

FIG.5

INTENSITY OF ORANGE FLUORESCENCE

INTENSITY OF RED FLUORESCENCE

## EUROPEAN SEARCH REPORT

Application Number

EP 01 13 0123

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 61198 A (HITACHI CHEMICAL CO LTD ;HITACHI LTD (JP); KAMBARA HIDEKI (JP); MI) 19 October 2000 (2000-10-19) * page 9, line 7 - page 11, line 5; figures 9,10A,10B,10C * | 1-3 | G01N33/543 |
| A | WO 00 63419 A (VIRTUAL ARRAYS INC) 26 October 2000 (2000-10-26) * page 29, line 16 - page 30, line 6 * | 1-3 | |
| A | NOLAN J P ET AL: "MICROSPHERE-BASED ASSAYS FOR GENOME ANALYSIS USING FLOW CYTOMETRY" AMERICAN JOURNAL OF HUMAN GENETICS, UNIVERSITY OF CHICAGO PRESS, CHICAGO,, US, 28 October 1997 (1997-10-28), page COMPLETE01 XP002916301 ISSN: 0002-9297 * abstract * | 1-3 | |
| A | US 6 159 748 A (HECHINGER MARK K) 12 December 2000 (2000-12-12) * column 36, line 44 - column 36, line 58; figures 9,11-15 * | 1-3 | TECHNICAL FIELDS SEARCHED (Int.Cl.7) G01N |
| A | GRAVES D J: "Powerful tools for genetic analysis come of age" TRENDS IN BIOTECHNOLOGY, ELSEVIER, AMSTERDAM, NL, vol. 17, no. 3, March 1999 (1999-03), pages 127-134, XP004157733 ISSN: 0167-7799 * figures 1,2 * | 1-3 | |
| A | DE 198 54 003 A (JENOPTIK JENA GMBH) 25 May 2000 (2000-05-25) * the whole document * | 1-3 | |

-/--

The present search report has been drawn up for all claims

| Place of search | Date of completion of the search | Examiner |
|---|---|---|
| MUNICH | 13 March 2002 | Thomte, M |

**European Patent Office**

## EUROPEAN SEARCH REPORT

Application Number

EP 01 13 0123

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | PATENT ABSTRACTS OF JAPAN vol. 012, no. 218 (M-711), 22 June 1988 (1988-06-22) & JP 63 016884 A (NITSUKOOSHI KK), 23 January 1988 (1988-01-23) * abstract * | 1-3 | |
| | | | TECHNICAL FIELDS SEARCHED (Int.Cl.7) |
| | The present search report has been drawn up for all claims | | |

| Place of search | Date of completion of the search | Examiner |
|---|---|---|
| MUNICH | 13 March 2002 | Thomte, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**    EP 01 13 0123

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2002

| Patent document cited in search report | | Publication date | Patent family member(s) | | Publication date |
|---|---|---|---|---|---|
| WO 0061198 | A | 19-10-2000 | JP | 2000346842 A | 15-12-2000 |
| | | | WO | 0061198 A1 | 19-10-2000 |
| WO 0063419 | A | 26-10-2000 | AU | 4245900 A | 02-11-2000 |
| | | | EP | 1175505 A1 | 30-01-2002 |
| | | | GB | 2364704 A | 06-02-2002 |
| | | | WO | 0063419 A1 | 26-10-2000 |
| US 6159748 | A | 12-12-2000 | NONE | | |
| DE 19854003 | A | 25-05-2000 | DE | 19854003 A1 | 25-05-2000 |
| | | | GB | 2343949 A | 24-05-2000 |
| JP 63016884 | A | 23-01-1988 | NONE | | |

EPO FORM P0459

For more details about this annex : see Official Journal of the European Patent Office, No. 12/82